(19) Europäisches Patentamt / European Patent Office / Office européen des brevets

(11) **EP 3 596 453 B1**

(12) **EUROPÄISCHE PATENTSCHRIFT**

(45) Veröffentlichungstag und Bekanntmachung des Hinweises auf die Patenterteilung:
**22.05.2024 Patentblatt 2024/21**

(21) Anmeldenummer: **18705088.5**

(22) Anmeldetag: **19.01.2018**

(51) Internationale Patentklassifikation (IPC):
**G01N 27/417** (2006.01)   **F01N 11/00** (2006.01)
**G01M 15/10** (2006.01)

(52) Gemeinsame Patentklassifikation (CPC):
**G01N 27/4175;** F01N 2560/02; F01N 2560/06;
G01M 15/104

(86) Internationale Anmeldenummer:
**PCT/EP2018/051294**

(87) Internationale Veröffentlichungsnummer:
**WO 2018/166677 (20.09.2018 Gazette 2018/38)**

(54) **SENSOR UND VERFAHREN ZUM BETREIBEN EINES SENSORS ZUR ERFASSUNG MINDESTENS EINER EIGENSCHAFT EINES MESSGASES IN EINEM MESSGASRAUM**

METHOD FOR OPERATING A SENSOR FOR DETECTING AT LEAST ONE PROPERTY OF A MEASURED GAS IN A MEASUREMENT GAS CHAMBER

PROCÉDÉ DE FONCTIONNEMENT D'UN CAPTEUR DE DÉTECTION D'AU MOINS UNE PROPRIÉTÉ D'UN GAZ À MESURER DANS UN ESPACE DE GAZ À MESURER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2017 DE 102017204236**

(43) Veröffentlichungstag der Anmeldung:
**22.01.2020 Patentblatt 2020/04**

(73) Patentinhaber: **Robert Bosch GmbH 70442 Stuttgart (DE)**

(72) Erfinder:
• **SCHROEDER, Andy**
**70469 Stuttgart (DE)**
• **DAECKE, Dirk**
**70619 Stuttgart (DE)**
• **WALDORF, Moritz**
**70188 Stuttgart (DE)**

(56) Entgegenhaltungen:
**DE-A1-102015 206 867     US-A1- 2005 034 986
US-B1- 6 270 639**

EP 3 596 453 B1

**Beschreibung**

Stand der Technik

Aus dem Stand der Technik ist eine Vielzahl von Sensoren und Verfahren zur Erfassung mindestens einer Eigenschaft eines Messgases in einem Messgasraum bekannt. Dabei kann es sich grundsätzlich um beliebige physikalische und/oder chemische Eigenschaften des Messgases handeln, wobei eine oder mehrere Eigenschaften erfasst werden können. Die Erfindung wird im Folgenden insbesondere unter Bezugnahme auf eine qualitative und/oder quantitative Erfassung eines Anteils einer Gaskomponente des Messgases beschrieben, insbesondere unter Bezugnahme auf eine Erfassung eines Sauerstoffanteils in dem Messgasteil. Der Sauerstoffanteil kann beispielsweise in Form eines Partialdrucks und/oder in Form eines Prozentsatzes erfasst werden. Alternativ oder zusätzlich sind jedoch auch andere Eigenschaften des Messgases erfassbar, wie beispielsweise die Temperatur.

Aus dem Stand der Technik sind insbesondere keramische Sensoren bekannt, welche auf der Verwendung von elektrolytischen Eigenschaften bestimmter Festkörper basieren, also auf Ionen leitenden Eigenschaften dieser Festkörper. Insbesondere kann es sich bei diesen Festkörpern um keramische Festelektrolyte handeln, wie beispielsweise Zirkoniumdioxid ($ZrO_2$), insbesondere yttriumstabilisiertes Zirkoniumdioxid (YSZ) und scandiumdotiertes Zirkoniumdioxid (ScSZ), die geringe Zusätze an Aluminiumoxid ($Al_2O_3$) und/oder Siliziumoxid ($SiO_2$) enthalten können.

Beispielsweise können derartige Sensoren als so genannte Lambdasonden oder als Stickoxidsensoren ausgestaltet sein, wie sie beispielsweise aus K. Reif, Deitsche, K-H. et al., Kraftfahrtechnisches Taschenbuch, Springer Vieweg, Wiesbaden, 2014, Seiten 1338 -1347, bekannt sind. Mit Breitband-Lambdasonden, insbesondere mit planaren Breitband-Lambdasonden, kann beispielsweise die Sauerstoffkonzentration im Abgas in einem großen Bereich bestimmt und damit auf das Luft-Kraftstoff-Verhältnis im Brennraum geschlossen werden. Die Luftzahl λ (Lambda) beschreibt dieses Luft-Kraftstoff-Verhältnis. Stickoxid-Sensoren bestimmen sowohl die Stickoxid- als auch die Sauerstoffkonzentration im Abgas.

Durch Kombination einer Pumpzelle, der Messzelle, und einer Sauerstoff-Referenzzelle, der Nernst-Zelle, kann ein Sensor zur Messung des Sauerstoffgehalts in einem Umgebungsgas aufgebaut werden. In einer Pumpzelle, die nach dem amperometrischen Pumpprinzip arbeitet, diffundieren bei Anlegen einer Spannung oder eines Stromes an die Pumpelektroden, die sich an unterschiedlichen Gasen befinden, ein Sauerstoff-Ionenstrom durch einen keramischen Körper (den sauerstoffleitenden Festelektrolyten), der die Gase voneinander trennt ("pumpen"). Wird die Pumpzelle dazu genutzt, den Sauerstoff-Partialdruck in einem Hohlraum, in das Umgebungsgas diffundieren kann, konstant zu halten, dann kann über die Messung des elektrischen Stroms auf die transportierte Menge Sauerstoff geschlossen werden. Dieser Pumpstrom ist, gemäß des Diffusionsgesetzes, direkt proportional zum Sauerstoff-Partialdruck im Umgebungsgas. Mit einer Nernst-Zelle kann das Verhältnis des Sauerstoff-Partialdrucks in im Hohlraum zum Sauerstoff-Partialdruck in einem weiteren Referenzgasraum über die sich ausbildende Nernstspannung bestimmt werden

Die elektrochemische Einheit eines derartigen Sensors kann als Regelstrecke in einem Regelkreis betrachtet werden. Die Steuergröße dieses Regelkreises ist die Spannung oder optional der Strom am Pumpelektrodenpaar. Die Regelgröße ist die Nernstspannung, die gemessen wird. Ziel der Regelung ist, trotz Änderungen des Sauerstoffgehalts im Abgas, den Sauerstoffpartialdruck im Hohlraum möglichst nah an einem spezifizierten bzw. vorgegebenen Wert zu halten. Zum Messen des Sauerstoffpartialdrucks im Hohlraum bzw. des Verhältnisses des Sauerstoffpartialdrucks im Hohlraum zum Partialdruck in der Referenzzelle dient die Nernstspannung. Über die angelegte Spannung an das Pumpelektrodenpaar kann der Sauerstoffpartialdruck im Hohlraum gesteuert werden. Dadurch, dass Sauerstoff-Ionen in den Hohlraum hineintransportiert oder aus diesem entfernt werden, was auch als Pumpen bezeichnet wird, kann die Gaskonzentration über die angelegte Pumpspannung bzw. den Pumpstrom aktiv beeinflusst werden. Alle Elektroden in dem Hohlraum haben einen gemeinsamen Rückleiter. Um auch negative Spannungen darstellen zu können, liegt diese virtuelle Masse auf einem erhöhten Potenzial zur elektrischen Masse. Auf diese Spannung werden die Nernstspannung oder die Spannung an der ersten Elektrode bezogen.

Zur Bestimmung des Sauerstoffpartialdrucks, bzw. des Sauerstoffgehalts, wird bei Breitband-Lambdasonden und Stickoxidsensoren ein Pumpstromsignal ausgewertet, das näherungsweise linear zur vorliegenden Sauerstoffkonzentration (des Umgebungsgases) ist.

Bei manchen Sensortypen kommt es, abhängig vom Aufbau des Sensors und der elektrischen Beschaltung des Sensors auf der Steuergeräte-Seite, bei Mager-Fett- und Fett-Mager-Wechseln bei Durchlaufen des Lambda=1Punktes (0% $O_2$) zu deutlichen Störungen des Pumpstromsignals, die auch als Lambda=1-Welligkeit bezeichnet werden.

Ursache hierfür sind elektrische Umladungseffekte an den Elektroden der Pumpzelle, die das Pumpstromsignal verfälschen und die Regelung der Pumpzelle stören. Die Einkopplung der Umladungsströme und Spannungen an der Pumpzelle in die Regelgröße Nernstspannung $U_{vs}$ erfolgt über die Nernstzelle des Sensorelements und über die externe elektrische Beschaltung zwischen Pump- und Nernstzelle. Durch die Störung der Regelgröße wird dann die Reglerstellgröße, die den Pumpstrom steuert, zunächst in die der $O_2$-Änderung entgegengesetzte Richtung geregelt, bis dann die Richtung des Pumpstroms schlagartig umgekehrt wird.

Durch diesen Mechanismus der Lambda=1-Welligkeit können die Sauerstoffsignale bei Lambda=1-Durchgängen so stark gestört sein, dass eine Auswertung des Sauerstoffsignals für Fahrzeuge mit Dieselmotor und NSC-Katalysator oder für Fahrzeuge mit Benzinmotor nicht möglich ist.

Die Lambda=1-Welligkeit kann typischerweise durch spezielle Designs der Steuerungselektronik oder durch aufwändige Sonden-Strukturen vermieden werden. Ein alternativer Ansatz zur Reduzierung der Lambda=1-Welligkeit basiert auf dem Konzept der Kompensation der elektrischen Umladungseffekte an der Pumpzelle des Sensorelements. Die gemessenen Signale am Sensor werden von einer speziellen Signalverarbeitung genutzt um so die Lambda=1-Störung zu kompensieren. Hierbei wird in einem zusätzlichen Signalnachverarbeitungsschritt die Störung der Lambda=1-Welligkeit geschätzt und dann vom Pumpstrom, dem Sauerstoffmesssignal entfernt.

Eine exakte Abbildung der Spannung an der äußeren Pumpelektrode auf eine zum Pumpstrom äquivalente Größe ist Voraussetzung dafür, dass die Funktion zur Kompensation der Lambda=1-Welligkeit außerhalb des Lambda=1-Bereichs keine Fehl-Korrekturen des Mess-Signals verursacht. So wird das Pumpstrom-Äquivalent aus der Spannung an der äußeren Pumpelektrode mittels einer fest hinterlegten Kennlinie berechnet. Das heißt, dass die hinterlegte feste Impedanzkennlinie die Charakteristik des Sensors beschreibt, mit der die aus der Spannung an der äußeren Pumpelektrode berechnete, zum Strom äquivalente Größe gleich dem gemessenen Pumpstrom ist. Dennoch sind Abweichungen der Impedanzkennlinie möglich. Weicht aber die in der Signalverarbeitung hinterlegte Impedanzkennlinie von der Charakteristik der Sonde ab, dann weicht auch die berechnete zum Strom äquivalente Größe vom gemessenen Pumpstrom ab und die Funktionalität des Algorithmus kann so sehr beeinträchtigt werden, dass ein Kompensationssignal erzeugt wird, obwohl kein Lambda=1-Durchgang stattfindet. Es kann also zu Fehl-Korrekturen des Messsignals kommen. Verfahren zum Betreiben von Sensoren sind auch bekannt aus der DE 10 2015 206867 A1, aus der US 6 270 639 B1 und aus der US 2005/034986 A1.

Offenbarung der Erfindung

Es wird daher ein Verfahren zum Betreiben eines Sensors zur Erfassung eines Sauerstoffanteils in einem Abgas einer Brennkraftmaschine vorgeschlagen, welches die Nachteile bekannter Verfahren zum Betreiben dieser Sensoren zumindest weitgehend vermeidet und bei dem insbesondere durch eine verbesserte Signalauswertung die Lambda=1-Welligkeit entfernt oder so deutlich reduziert wird, dass das korrigierte Signal annähernd dem real vorliegenden Sauerstoffgehalt insbesondere im Bereich um Lambda = 1 entspricht, und bei dem Fehlkorrekturen des Messsignals im Bereich um Lambda = 1 vermieden werden.

Ein erfindungsgemäßes Verfahren zum Betreiben eines Sensors zur Erfassung eines Sauerstoffanteils in einem Abgas einer Brennkraftmaschine, umfasst ein Sensorelement zur Erfassung der Eigenschaft des Messgases, wobei das Sensorelement einen Festelektrolyten, eine erste Elektrode, eine zweite Elektrode, eine dritte Elektrode und eine vierte Elektrode aufweist, wobei die erste Elektrode und die zweite Elektrode derart mit dem Festelektrolyten verbunden sind, dass die erste Elektrode, die zweite Elektrode und der Festelektrolyt eine Pumpzelle bilden, wobei die dritte Elektrode und die vierte Elektrode derart mit dem Festelektrolyten verbunden sind, dass die dritte Elektrode, die vierte Elektrode und der Festelektrolyt eine Nernstzelle bilden, wobei eine Nernstspannung der Nernstzelle geregelt wird, wobei ein Messsignal des Sensorelements basierend auf einem Pumpstrom ermittelt wird, wobei weiterhin mittels einer Signalverarbeitung eine Kompensationsgröße bestimmt wird, wobei aus dem Messsignal und der Kompensationsgröße mindestens eine korrigiertes Messsignal bestimmt wird, wobei aus der korrigierten Messsignal die Eigenschaft des Messgases in dem Messgasraum bestimmt wird, wobei die Kompensationsgröße zumindest teilweise abhängig ist von dem Pumpstrom und einer an die Pumpzelle angelegten Spannung, wobei die Signalverarbeitung zur Bestimmung der Kompensationsgröße eine Tiefpassfilterung des Pumpstroms und der an die Pumpzelle angelegten Spannung mittels eines Tiefpassfilters umfasst, wobei eine Zeitkonstante und/oder ein Verstärkungsfaktors des Tiefpassfilters in Abhängigkeit von der an die Pumpzelle angelegten Spannung oder einem sich zeitlich ändernden Anteil der an die Pumpzelle angelegten Spannung gesteuert wird, wobei die

Zeitkonstante und/oder der Verstärkungsfaktors des Tiefpassfilters können vergrößert werden, falls die an die Pumpzelle angelegten Spannung und/oder der sich zeitlich ändernden Anteil der an die Pumpzelle angelegten Spannung einen vorbestimmten Wert erreicht. Der vorbestimmte Wert stellt insbesondere eine vorbestimmte Zusammensetzung des Messgases dar. Die vorbestimmte Zusammensetzung ist bevorzugt Lambda = 1. Die Zeitkonstante und/oder der Verstärkungsfaktor können mittels einer Abbildungsfunktion in Abhängigkeit von der an die Pumpzelle angelegten Spannung variiert werden. Die Abbildungsfunktion kann mittels Interpolation, insbesondere linearer Interpolation, und einem Kennfeld gebildet werden. Der sich zeitlich ändernde Anteil der an die Pumpzelle angelegten Spannung kann mittels eines Hochpassfilters aus der an die Pumpzelle angelegten Spannung herausgefiltert werden.

Es wird zudem ein Computerprogramm vorgeschlagen, welches eingerichtet ist, jeden Schritt des erfindungsgemäßen Verfahrens durchzuführen.

Weiterhin wird ein elektronisches Speichermedium vorgeschlagen, auf welchem ein Computerprogramm zur Durchführung des erfindungsgemäßen Verfahrens gespeichert ist.

Die Erfindung umfasst darüber hinaus ein elektronisches Steuergerät, welches das erfindungsgemäße elektronische Speichermedium mit dem besagten Computerprogramm zur Durchführung des erfindungsgemäßen Verfahrens enthält, umfasst.

Unter einem Festelektrolyten ist im Rahmen der vorliegenden Erfindung ein Körper oder Gegenstand mit elektrolytischen Eigenschaften, also mit Ionen leitenden Eigenschaften, zu verstehen. Insbesondere kann es sich um einen keramischen Festelektrolyten handeln. Dies umfasst auch das Rohmaterial eines Festelektrolyten und daher die Ausbildung als so genannter Grünling oder Braunling, der erst nach einem Sintern zu einem Festelektrolyten wird. Insbesondere kann der Festelektrolyt als Festelektrolytschicht oder aus mehreren Festelektrolytschichten ausgebildet sei. Unter einer Schicht ist im Rahmen der vorliegenden Erfindung eine einheitliche Masse in flächenhafter Ausdehnung einer gewissen Höhe zu verstehen, die über, unter oder zwischen anderen Elementen liegt.

Unter einer Elektrode ist im Rahmen der vorliegenden Erfindung allgemein ein Element zu verstehen, welches in der Lage ist, den Festelektrolyten derart zu kontaktieren, dass durch den Festelektrolyten und die Elektrode ein Strom aufrechterhalten werden kann. Dementsprechend kann die Elektrode ein Element umfassen, an welchem die Ionen in den Festelektrolyten eingebaut und/oder aus dem Festelektrolyten ausgebaut werden können. Typischerweise umfassen die Elektroden eine Edelmetallelektrode, welche beispielsweise als Metall-Keramik-Elektrode auf dem Festelektrolyten aufgebracht sein kann oder auf andere Weise mit dem Festelektrolyten in Verbindung stehen kann. Typische Elektrodenmaterialien sind Platin-Cermet-Elektroden. Auch andere Edelmetalle, wie beispielsweise Gold oder Palladium, sind jedoch grundsätzlich einsetzbar.

Unter einem Heizelement ist im Rahmen der vorliegenden Erfindung ein Element zu verstehen, das zum Erwärmen des Festelektrolyten und der Elektroden auf mindestens ihre Funktionstemperatur und vorzugsweise auf ihre Betriebstemperatur dient. Die Funktionstemperatur ist diejenige Temperatur, ab der der Festelektrolyt für Ionen leitend wird und die ungefähr 350 °C beträgt. Davon ist die Betriebstemperatur zu unterscheiden, die diejenige Temperatur ist, bei der das Sensorelement üblicherweise betrieben wird und die höher ist als die Funktionstemperatur. Die Betriebstemperatur kann beispielsweise von 700 °C bis 950 °C sein. Das Heizelement kann einen Heizbereich und mindestens eine Zuleitungsbahn umfassen. Unter einem Heizbereich ist im Rahmen der vorliegenden Erfindung der Bereich des Heizelements zu verstehen, der in dem Schichtaufbau entlang einer zu der Oberfläche des Sensorelements senkrechten Richtung mit einer Elektrode überlappt. Üblicherweise erwärmt sich der Heizbereich während des Betriebs stärker als die Zuleitungsbahn, so dass diese unterscheidbar sind. Die unterschiedliche Erwärmung kann beispielsweise dadurch realisiert werden, dass der Heizbereich einen höheren elektrischen Widerstand aufweist als die Zuleitungsbahn. Der Heizbereich und/oder die Zuleitung sind beispielsweise als elektrische Widerstandsbahn ausgebildet und erwärmen sich durch Anlegen einer elektrischen Spannung. Das Heizelement kann beispielsweise aus einem Platin-Cermet hergestellt sein.

Unter einem Regelkreis ist im Rahmen der vorliegenden Erfindung ein in sich geschlossener Wirkungsablauf für die Beeinflussung einer physikalischen Größe in einem technischen Prozess zu verstehen. Wesentlich hierbei ist die Rückführung des aktuellen Wertes, der auch als Ist-Wert bezeichnet wird, an das Regelgerät, das einer Abweichung vom Soll-Wert kontinuierlich entgegenwirkt. Der Regelkreis besteht aus der Regelstrecke, dem Regelgerät und einer negativen Rückkopplung des Ist-Werts als Regelgröße. Die Regelgröße wird mit dem Soll-Wert als Führungsgröße verglichen. Die Regelabweichung zwischen dem Ist-Wert und dem Soll-Wert wird dem Regelgerät zugeführt, das daraus entsprechend der gewünschten Dynamik des Regelkreises eine Steuergröße für die Regelstrecke bildet. Unter der Regelstrecke ist im Rahmen der vorliegenden Erfindung derjenige Teil des Regelkreises zu verstehen, der die Regelgröße enthält, auf die das Regelgerät über die Steuer- oder Stellgröße wirken soll. Im Rahmen der vorliegenden Erfindung ist die elektrochemische Einheit des Sensors die Regelstrecke.

Unter einer Messgröße ist im Rahmen der vorliegenden Erfindung grundsätzlich eine beliebige physikalische und/oder chemische Größe und ein diese Größe(n) äquivalent anzeigendes Signal, d.h. ein äquivalentes Signal, zu verstehen. Bevorzugt handelt es sich bei der Messgröße um mindestens ein Messsignal des Sensorelements. Bevorzugt kann es sich bei der Messgröße um mindestens einen Pumpstrom, beispielsweise einen Grenzstrom, handeln. Es kann sich bei der Messgröße aber auch um eine von dem Pumpstrom abhängige Größe handeln. Beispielsweise kann es sich bei der Messgröße um eine Pumpspannung und/oder um eine umgesetzte Ladung handeln. Unter dem Ausdruck "erfasst werden" in diesem Zusammenhang ist im Rahmen der vorliegenden Erfindung zu verstehen, dass die Messgröße beispielsweise als Messsignal von dem Sensorelement ausgegeben wird und/oder die Messgröße von einem Steuergerät verarbeitet und/oder ausgewertet und/oder gespeichert wird.

Unter einer Kompensationsgröße ist im Rahmen der vorliegenden Erfindung grundsätzlich eine beliebige chemische und/oder physikalische Größe und ein diese Größe(n) äquivalent anzeigendes Signal, d.h. ein äquivalentes Signal, zu verstehen. Bevorzugt kann die Kompensationsgröße die gleiche physikalische und/oder chemische Größe umfassen wie die Messgröße. Bevorzugt kann es sich bei der Kompensationsgröße um eine Pumpstromabweichung handeln. Beispielsweise kann es sich bei der Kompensationsgröße um mindestens einen Umladungsstrom und/oder mindestens eine Elektrodenladung handeln. Die Kompensationsgröße ist zumindest teilweise abhängig von einem Pumpstrom und einer an die Pumpzelle angelegten Spannung. Insbesondere ist die Kompensationsgröße zumindest teilweise abhängig von einer zeitlichen Änderung des Pumpstroms und der an die Pumpzelle angelegten Spannung. Beispielsweise kann es sich bei der Kompensationsgröße um einen Maßstab für eine Verfälschung der Messgröße bedingt durch elektrochemische Umladungseffekte bei einem Lambda=1-Durchgang an den Elektroden der Pumpzelle handeln.

Aus dem Messsignal und der Kompensationsgröße wird mindestens ein korrigiertes Messsignal bestimmt. Bei dem korrigierten Messsignal kann es sich prinzipiell um eine beliebige chemische und/oder physikalische Größe und ein dieser(n) Größe(n) äquivalent anzeigendes Signal, d.h. ein äquivalentes Signal, handeln. Bevorzugt kann es sich bei der korrigierten Messgröße um die gleiche physikalische und/oder chemische Größe und/oder die Kompensationsgröße handeln. Bei dem korrigierten Messsignal kann es sich insbesondere um eine Größe handeln, welche von Störeffekten bereinigt ist. Der Anteil des Gases in dem Messgasraum kann bevorzugt aus dem korrigierten Messsignal genauer bestimmt werden als aus dem Messsignal vor Korrektur. Bei der Bestimmung des korrigierten Messsignals aus dem Messsignal und der Kompensationsgröße kann es sich beispielsweise um eine Signalverarbeitung in Form einer Berechnung und/oder einer Zuordnung handeln. Entsprechend kann der Anteil des Messgases in dem Messgasraum aus dem korrigierten Messsignal beispielsweise durch Berechnung und/oder durch Zuordnung bestimmt werden.

Beispielsweise kann bei der Bestimmung des Anteils des Messgases in dem Messgasraum aus dem korrigierten Messsignal mindestens eine Kennlinie verwendet werden. Bei der Kennlinie kann es sich beispielsweise um eine Zuordnung des korrigierten Messsignals zu einem Anteil des Messgases handeln. Beispielsweise kann es sich bei der Kennlinie um eine Zuordnung zwischen einem korrigierten Pumpstrom und einem Anteil an Sauerstoff in dem Messgas, beispielsweise einem Sauerstoffpartialdruck, handeln.

Die Messgröße kann mindestens einen Pumpstrom umfassen. Beispielsweise kann es sich bei dem Pumpstrom um die gesamte über die Pumpzelle umgesetzte Ladung pro Zeit handeln. Beispielsweise kann die Messgröße der Pumpstrom direkt oder ein den Pumpstrom anzeigendes Signal sein. Beispielsweise kann es sich bei dem Pumpstrom auch um eine Messgröße handeln, welche von dem Pumpstrom abhängt. Beispielsweise kann die Messgröße eine von dem Pumpstrom abhängige Größe sein. Beispielsweise kann die Messgröße zumindest den Pumpstrom umfassen. Die Kompensationsgröße kann mindestens von einem Umladungsstrom abhängig sein. Bei dem Umladungsstrom kann es sich um Ströme handeln, welche durch Ladeprozesse und/oder Entladeprozesse, beispielsweise bei Änderung des Anteils des Messgases in dem Messgasraum, auftreten können. Bei dem Umladungsstrom kann es sich um Ströme handeln, welche bei einem Lambda=1-Durchgang auftreten können. Die Kompensationsgröße kompensiert die durch Umladungseffekte hervorgerufenen Umladungsströme und Störungen der Reglerstellgröße.

Die Messgröße, Kompensationsgröße und korrigierte Messgröße müssen entsprechend den vorherigen Ausführungen nicht als absolute Größen vorliegen. Die vorliegende Erfindung erlaubt explizit alternativ oder zusätzlich eine Korrektur der Messgröße bzw. Kompensation der Umladung auf Ebene der Signalverarbeitung, so dass es sich bei der Messgröße, Kompensationsgröße und korrigierte Messgröße entsprechend um diese charakterisierende Signale handeln kann.

Unter einer Impedanz der Pumpzelle ist im Rahmen der vorliegenden Erfindung nicht der Ohmsche Widerstand der Pumpzelle, sondern ein sensorelementspezifischer Zusammenhang zwischen Pumpspannung und einem Strom-Äquivalent der Pumpspannung zu verstehen, der unter anderem frequenzabhängig ist. Unter bestimmten Betriebsbedingungen ist das Strom-Äquivalent der Pumpspannung gleich der Pumpspannung (z.B. bei geringer zeitlicher Änderung der $O_2$-Konzentration im Abgas).Im hier Betrachteten DC-Fall (Grenzstrombetrieb), ist die Impedanz von der Sauerstoffkonzentration im Abgas aber auch von weiteren Abgasbedingungen, wie zum Beispiel der Gasgeschwindigkeit abhängig. Die Impedanz beschreibt im Rahmen der vorliegenden Erfindung insbesondere das Verhältnis von Strom-Äquivalent der Pumpspannung und Pumpspannung. Die Impedanz der Pumpzelle kann allgemein als komplexer Zahlenwert definiert werden. Die Impedanz der Pumpzelle kann somit auch frequenzabgängig sein. Im Rahmen der vorliegenden Erfindung kann die Impedanz der Pumpzelle mit Hilfe eines Adaptionsalgorithmus aus den Kombinationen der Spannung an der Pumpzelle und dem Pumpstrom bestimmt werden. Die Impedanz der Pumpzelle kann als Funktion der an der Pumpzelle anliegenden Spannung (oder alternativ als Funktion des Pumpstroms) bestimmt werden.

In einem weiteren Schritt des erfindungsgemäßen Verfahrens wird ein Signal generiert, das den sich ändernden Anteil der an die Pumpzelle angelegten Spannungen und Ströme widergibt. Dies kann zum Beispiel durch eine zeitliche Differenzierung oder eine andere Art der Hochpassfilterung erfolgen. Allgemein wird hier eine Hochpassfilterung durchgeführt. Unter einem Hochpass ist im Rahmend er vorliegenden Erfindung ein Filter zu verstehen, der hochfrequente Signalanteile oberhalb seiner Grenzfrequenz durchlässt, während niederfrequente Signalanteile gedämpft werden. Konstante oder nur langsam ändernde Signalkomponenten können so entfernt werden. Durch eine Filterung kann auch die Phase des Signals verändert werden. Zum Beispiel hat ein Differenzierer eine Phase von 90°. Hochpassfilter können im Rahmen der vorliegenden Erfindung als rekursive Filter oder nichtrekursive Filter realisiert werden. Sie können eine finite oder eine infinite Impulsantwort haben.

Bei einer Lambda=1-Welligkeit zeigen das Pumpstromsignal und die Spannung an der Pumpzelle einen unterschiedlichen Verlauf. Die Information über ein Auseinanderlaufen der Spannungen und Ströme, die an die Pumpzelle angelegt werden, steckt in der Differenz der Änderungssignale der Spannung und des Stromes, die an die Pumpzelle angelegt werden. Dieses Differenzsignal ist auch ein Maß für die Verschiebung von Ladungen bei der Umladung der elektrochemischen Zellen. Eine Umladung der elektrochemischen Zelle bewirkt, eine Änderung im Strom, ohne eine Änderung der an der Pumpzelle angelegten Spannung. Durch die Änderung der Nernstspannung an den Elektroden der Pumpzelle wird ein Umladungsstrom erzeugt. Dieser Umladungsstrom wird dem eigentlichen Signal aus dem Grenzstrom-Betrieb überlagert. Im Differenzsignal wird dann nur die Änderung des Umladungsstroms abgebildet.

Das Differenzsignal der Änderungen des Pumpstroms und der Änderungen des Strom-Äquivalents der Pumpspannung wird über ein Zeitintervall aufsummiert, während dieses Summensignal graduell wieder reduziert wird. Dadurch erhält man ein dem Umladungsstrom äquivalentes Signal, das Umladungs-Kompensationssignal. Hierzu kann das Differenzsignal mit einem Tiefpassfilter gefiltert werden.

Unter einem Tiefpassfilter ist im Rahmen der vorliegenden Erfindung ein Filter zu verstehen, der niederfrequente Signalanteile unterhalb seiner Grenzfrequenz durchlässt, während hochfrequente Signalanteile gedämpft werden. Aufgabe des Tiefpassfilters ist, den Verlauf des Signals des Differenzsignals über das Zeitintervall der Störung zu summieren. Ist das Differenzsignal klein, wird das Kompensationsstromsignal gegen Null gehen. Eine einfache Tiefpass-Umsetzung kann zum Beispiel mit einem Leaky-Integrator erreicht werden. In einer alternativen Umsetzung können die Eigenschaften des Tiefpasses in Abhängigkeit von der Größe des Eingangssignals geändert werden.

In einem abschließenden Schritt wird das Umladungs-Kompensationssignal vom gemessenen Pumpstromsignal subtrahiert bzw. abgezogen. Aus dem korrigierten Pumpstromsignal kann nun ein Signal abgeleitet werden, das die Konzentrationen und zeitlichen Änderungen des Sauerstoffgehalts des Umgebungsgases wiedergibt. In nachfolgenden Schritten kann mit Hilfe von Kennfeldern aus dem korrigierten Pumpstromsignal ein kalibriertes Sauerstoff-Signal abgeleitet werden.

Unter einem Hochpassfilter ist im Rahmen der vorliegenden Erfindung ein Filter zu verstehen, der Frequenzen oberhalb ihrer Grenzfrequenz annähernd ungeschwächt passieren lässt und tiefere Frequenzen dämpft.

Ein Grundgedanke der vorliegenden Erfindung ist, durch eine verbesserte Signalauswertung die Lambda=1-Welligkeit zu entfernen oder stark zu reduzieren und dabei Fehlkorrekturen des Messsignals zu vermeiden.

Die Erfindung beruht auf der Erkenntnis, dass die Signalverarbeitung zur Kompensation der Lambda=1-Welligkeit des Sensors reduziert beim Lambda=1 Durchgang die Störungen des Messsignals deutlich. Bei starker Dynamik im Mageren kann diese Signalverarbeitung dann aber ein falsches Korrektursignal erzeugen, wenn die Impedanzcharakteristik der Pumpzelle der Sonde und die entsprechende Kennlinie in der Signalverarbeitung voneinander abweichen. In diesem Fall verschlechtert das Kompensationssignal das Messsignal des Sensors. Solche Fehlkorrekturen können einerseits vermieden werden, indem die Impedanzkennlinie durch eine aufwändige adaptive Signalverarbeitung an die Sondeneigenschaften angepasst wird. Im Rahmend er vorliegenden Erfindung wird alternativ vorgeschlagen, dass Fehlkorrekturen außerhalb des Lambda=1 Bereiches auch dadurch vermieden werden können, indem hier kein Kompensationssignal erzeugt wird. Das heißt, dass die Signalverarbeitung zur Kompensation der Umladungseffekte im Wesentlichen im Bereich des Lambda=1-Punktes aktiv sein soll.

Die Signalverarbeitung zur Schätzung des Umladungs-Fehlersignals muß also so gesteuert werden können, dass die Fähigkeit zum Erzeugen eines Kompensationssignals gerade dann besonders groß ist, wenn auch eine Lambda=1-Störung auftreten kann. Andererseits wird diese Fähigkeit nicht in den Betriebszuständen gebraucht, in denen eine Lambda=1-Störung nicht auftreten kann, aber das Messsignal durch ein fehlerhaftes Kompensationssignal verfälscht werden könnte.

Hierzu ist also ein Kriterium erforderlich, das sicher erkennt, dass sich die Sauerstoffkonzentration des Messgases in der Nähe des Lambda=1-Punktes befindet. Alternativ kann ein Kriterium genutzt werden, das erkennt, dass eine Lambda=1-Welligkeit auftritt. Ein mögliches Kriterium kann aus dem Mess-Signal der Spannung $U_P$ an der äußeren Pumpelektrode abgeleitet werden. So ist ohne Signalverarbeitung die Spannung $U_P$ im Bereich des Lambda=1-Punktes und somit in der Nähe von 0% $O_2$ ca. 0 Volt, während das $U_{IP}$ Signal eine deutliche Lambda=1-Welligkeit aufweist. Aus dem $U_{IP}$ Signal kann eine Größe hergeleitet werden, die die Signalverarbeitung zur Kompensation der Lambda=1-Welligkeit so steuert, dass die Kompensationsfunktion in der Umgebung des Lambda=1-Punktes aktiv ist, aber in anderen Betriebspunkten, insbesondere im Mageren, kein Kompensationssignal erzeugen kann.

Ein bedeutender Vorteil der in dieser Erfindung beschriebenen Ergänzungen und Änderungen im Vergleich zu der eingangs beschriebenen Signalverarbeitung zur Umladungskompensation sind ihre einfache Umsetzung im Vergleich zu der beschriebenen Variante des Algorithmus. Der Sensor liefert ein genaues und gegen Änderungen der Sondencharakteristik robustes Signal im Mageren, während eine aufwändige und komplexe Adaptionsfunktion der Kennlinie nicht umgesetzt werden muss. Insbesondere können hier die gemäß der On Board Diagnose-Regularien erforderlichen aufwändigen Diagnosefunktionen für die Adaptionsfunktion vermieden werden. Neben der geringeren Komplexität der Software hat dies insbesondere den Vorteil, dass ein erheblicher Verifikations- und Testaufwand vermieden wird.

Die Robustheit der Signalverarbeitung der Lambda=1-Welligkeitskompensation hinsichtlich Fehlkorrekturen aufgrund von Änderungen der Impedanz der Pumpzelle kann mit der, in dieser Erfindungsmeldung beschriebenen, Signalverarbeitung deutlich verbessert werden. Durch die Steuerungsfunktion, die eine Lambda=1-Welligkeits Kompensation nur in der Umgebung des Lambda=1-Punktes durchführt, kann vermieden werden, dass auch dann, wenn die Impedanzkennlinien des Algorithmus von den Eigenschaften der Sonde abweichen, es zu einer Fehlkorrektur des Messsignals kommt. So erzeugt zum Beispiel im Mageren die Signalverarbeitung zur Kompensation der Lambda=1-Welligkeit kein Signal und damit sind auch Fehlkorrekturen nicht möglich.

Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.

Es zeigen:

Figur 1     einen prinzipiellen Aufbau eines erfindungsgemäßen Sensor,

Figur 2     ein Blockdiagramm der Signalauswertung mit Umladungskorrektur bei dem Sensor,

Figur 3     ein Blockdiagramm einer Signalbearbeitung bei der Umladungskorrektur,

Figur 4     Signale des Tiefpassfilters,

Figur 5     verschiedene Messsignalverläufe über die Zeit aufgetragen

Figur 6     einen Verlauf der Spannung an der Pumpzelle und des Spannungsabfalls am Messwiderstand und

Figur 7     zeigt ein Blockschaltbild mit einer alternativen Signalverarbeitung.

Ausführungsformen der Erfindung

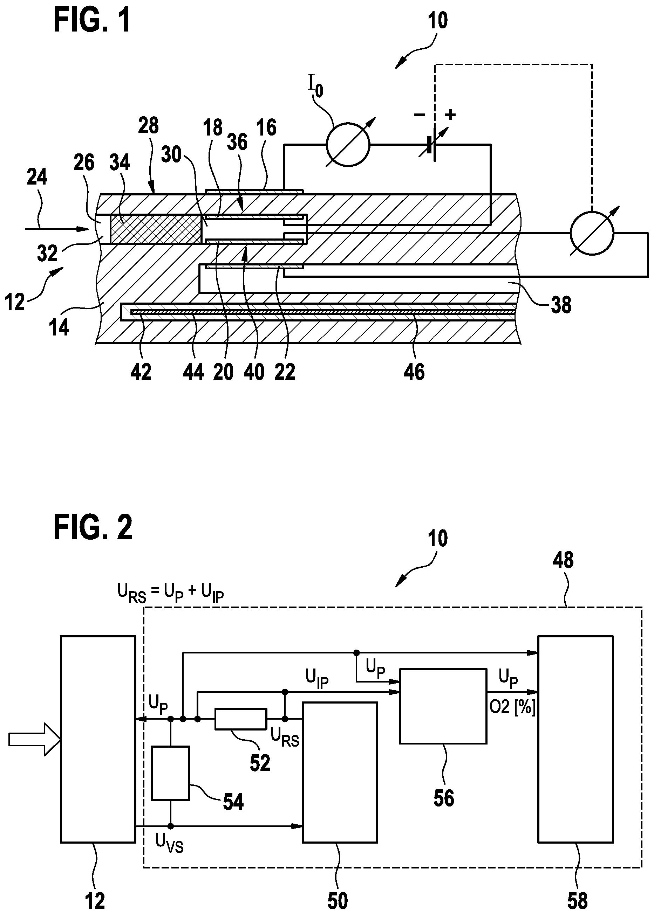

Figur 1 zeigt einen prinzipiellen Aufbau eines erfindungsgemäßen Sensors 10. Der in Figur 1 dargestellte Sensor 10 kann zum Nachweis von physikalischen und/oder chemischen Eigenschaften eines Messgases verwendet werden, wobei eine oder mehrere Eigenschaften erfasst werden können. Die Erfindung wird im Folgenden insbesondere unter Bezugnahme auf eine qualitative und/oder quantitative Erfassung einer Gaskomponente des Messgases beschrieben, insbesondere unter Bezugnahme auf eine Erfassung eines Sauerstoffanteils in dem Messgas. Der Sauerstoffanteil kann beispielsweise in Form eines Partialdrucks und/oder in Form eines Prozentsatzes erfasst werden. Grundsätzlich sind jedoch auch andere Arten von Gaskomponenten erfassbar, wie beispielsweise Stickoxide, Kohlenwasserstoffe und/oder Wasserstoff. Alternativ oder zusätzlich sind jedoch auch andere Eigenschaften des Messgases erfassbar. Die Erfindung ist insbesondere im Bereich der Kraftfahrzeugtechnik einsetzbar, so dass es sich bei dem Messgasraum insbesondere um einen Abgastrakt einer Brennkraftmaschine handeln kann, bei dem Messgas insbesondere um ein Abgas.

Der Sensor 10 weist ein Sensorelement 12 auf. Das Sensorelement 12 kann als keramischer Schichtaufbau ausgebildet sein, wie nachstehend ausführlicher beschrieben wird. Das Sensorelement 12 weist einen Festelektrolyten 14, eine erste Elektrode 16, eine zweite Elektrode 18, eine dritte Elektrode 20 und eine vierte Elektrode 22 auf. Der Festelektrolyt 14 kann aus mehreren keramischen Schichten in Form von Festelektrolytschichten zusammengesetzt sein oder mehrere Festelektrolytschichten umfassen. Beispielsweise umfasst der Festelektrolyt 14 eine Pumpfolie oder Pumpschicht, eine Zwischenfolie oder Zwischenschicht und eine Heizfolie bzw. Heizschicht, die übereinander bzw. untereinander angeordnet sind. Die Bezeichnung der Elektroden 16, 18, 20, 22 soll keine Gewichtung ihrer Bedeutung angeben, sondern lediglich ermöglichen, diese begrifflich zu unterscheiden.

Das Sensorelement 12 weist ferner einen Gaszutrittsweg 24 auf. Der Gaszutrittsweg 24 weist ein Gaszutrittsloch 26 auf, das sich von einer Oberfläche 28 des Festelektrolyten 14 ins Innere des Schichtaufbaus des Sensorelements 12 erstreckt. In dem Festelektrolyten 14 ist ein Elektrodenhohlraum 30 vorgesehen, der das Gaszutrittsloch 26 umgibt, beispielsweise ringförmig oder rechteckig. Der Elektrodenhohlraum 30 ist Teil des Gaszutrittswegs 24 und steht über das Gaszutrittsloch 26 mit dem Messgasraum in Verbindung. Beispielsweise erstreckt sich das Gaszutrittsloch 26 als zylindrisches Sackloch senkrecht zu der Oberfläche 28 des Festelektrolyten 14 in das Innere des Schichtaufbaus des Sensorelements 12. Insbesondere ist der Elektrodenhohlraum 30 im Wesentlichen ringförmig oder rechteckig ausgebildet und bei einer Betrachtung in einer Querschnittsansicht von drei Seiten von dem Festelektrolyten 14 begrenzt. Zwischen dem Gaszutrittsloch 26 und dem Elektrodenhohlraum 30 ist ein Kanal 32 angeordnet, welcher ebenfalls Bestandteil des Gaszutrittswegs 24 ist. In diesem Kanal 32 ist eine Diffusionsbarriere 34 angeordnet, welche ein Nachströmen von Gas aus dem Messgasraum in den Elektrodenhohlraum 30 vermindert oder sogar verhindert und lediglich eine Diffusion ermöglicht.

Die erste Elektrode 16 ist auf der auf der Oberfläche 28 des Festelektrolyten 14 angeordnet. Die erste 16 Elektrode kann das Gaszutrittsloch 26 ringförmig umgeben und von dem Messgasraum beispielsweise durch eine nicht näher gezeigte gasdurchlässige Schutzschicht getrennt sein. Die zweite Elektrode 18 ist in dem Elektrodenhohlraum 30 angeordnet. Die zweite Elektrode 18 kann ebenfalls ringförmig ausgestaltet sein und rotationssymmetrisch um das Gaszutrittsloch 26 angeordnet sein. Beispielsweise sind die erste Elektrode 16 und die zweite Elektrode 18 koaxial zu dem Gaszutrittsloch 26 angeordnet. Die erste Elektrode 16 und die zweite Elektrode 18 sind derart mit dem Festelektrolyten 14 und insbesondere mit der Pumpschicht verbunden, insbesondere elektrisch verbunden, dass die erste Elektrode 16, die zweite Elektrode 18 und der Festelektrolyt 14 eine Pumpzelle 36 bilden. Entsprechend können die erste Elektrode 16 auch als äußere Pumpelektrode und die zweite Elektrode 18 als innere Pumpelektrode bezeichnet werden. Über die Diffusionsbarriere 34 lässt sich ein Grenzstrom der Pumpzelle 36 einstellen. Der Grenzstrom stellt somit einen Stromfluss zwischen der ersten Elektrode 16 und der zweiten Elektrode 18 über den Festelektrolyten 14 dar.

Das Sensorelement 12 weist weiterhin einen Referenzgasraum 38 auf. Der Referenzgasraum 38 kann sich senkrecht zu einer Erstreckungsrichtung des Gaszutrittslochs 26 in das Innere des Festelektrolyten 14 erstrecken. Wie oben erwähnt, ist das Gaszutrittsloch 26 zylindrisch ausgebildet, so dass die Erstreckungsrichtung des Gaszutrittslochs 26 parallel zu einer Zylinderachse des Gaszutrittslochs 26 verläuft. In diesem Fall erstreckt sich der Referenzgasraum 38 senkrecht zu der Zylinderachse des Gaszutrittslochs 26. Es wird ausdrücklich erwähnt, dass der Referenzgasraum 38 auch in einer gedachten Verlängerung des Gaszutrittslochs 26 und somit weiter im Inneren des Festelektrolyten 14 angeordnet sein kann. Der Referenzgasraum 38 muss nicht als makroskopischer Referenzgasraum ausgebildet sein. Beispielsweise kann der Referenzgasraum 38 als so genannte gepumpte Referenz ausgeführt sein, das heißt als künstliche Referenz.

Die dritte Elektrode 20 ist ebenfalls in dem Elektrodenhohlraum 30 angeordnet. Beispielsweise liegt die dritte Elektrode 20 der zweiten Elektrode 18 gegenüber. Die vierte Elektrode 22 ist in dem Referenzgasraum 38 angeordnet. Die dritte Elektrode 20 und die vierte Elektrode 22 sind derart mit Festelektrolyten 14 verbunden, dass die dritte Elektrode 20, die vierte Elektrode 22 und derjenige Teil des Festelektrolyten 14 zwischen der dritten Elektrode 22 und der vierten Elektrode 22 eine Nernstzelle 40 bilden. Mittels der Pumpzelle 36 kann beispielsweise ein Pumpstrom durch die Pumpzelle 36 derart eingestellt werden, dass in dem Elektrodenhohlraum 30 die Bedingung λ (Lambda)= 1 oder eine andere bekannte Zusammensetzung herrscht. Diese Zusammensetzung wird wiederum von der Nernstzelle 40 erfasst, indem eine Nernstspannung Uvs zwischen der dritten Elektrode 20 und der vierten Elektrode 22 gemessen wird. Da in dem Referenzgasraum 38 eine bekannte Gaszusammensetzung vorliegt bzw. diese einem Sauerstoffüberschuss ausgesetzt ist, kann anhand der gemessenen Spannung auf die Zusammensetzung in dem Elektrodenhohlraum 30 geschlossen werden.

In der Verlängerung der Erstreckungsrichtung des Gaszutrittslochs 26 ist ein Heizelement 42 in dem Schichtaufbau des Sensorelements 12 angeordnet. Das Heizelement 42 weist einen Heizbereich 44 und elektrische Zuleitungsbahnen 46 auf. Der Heizbereich 44 ist beispielsweise mäanderförmig ausgebildet. Das Heizelement 42 ist in dem Festelektrolyten 14 zwischen der Zwischenschicht und der Heizschicht angeordnet. Es wird ausdrücklich erwähnt, dass das Heizelement 42 beidseitig von einer dünnen Schicht aus einem elektrisch isolierenden Material, wie beispielsweise Aluminiumoxid, umgeben ist, auch wenn dies in den Figuren nicht näher dargestellt ist. Mit anderen Worten ist zwischen der Zwischenschicht und dem Heizelement 42 sowie zwischen dem Heizelement 42 und der Heizschicht die dünne Schicht aus dem elektrisch isolierenden Material angeordnet. Da eine derartige Schicht beispielsweise aus dem oben genannten Stand der Technik bekannt ist, wird diese nicht näher beschrieben. Für weitere Details bezüglich der Schicht aus dem elektrisch isolierenden Material wird daher auf den oben genannten Stand der Technik, verwiesen, dessen Inhalt betreffend die Schicht aus dem elektrischen Material durch Verweis hierin eingeschlossen ist.

Figur 2 zeigt ein Blockdiagramm der Signalauswertung mit Umladungskorrektur bei dem Sensor 10. Wie in Figur 2 gezeigt ist, weist der Sensor 10 ein elektronisches Steuergerät 48 auf. Das elektronische Steuergerät 48 weist ein Regelgerät 50 zum Regeln einer Nernstspannung Uvs der Nernstzelle 40 auf. Zwischen dem Regelgerät 50 und der ersten Elektrode 16 ist ein Messwiderstand 52 angeordnet. Des Weiteren ist optional eine RC-Brücke 54, d.h. Reihenschaltung aus Widerstand und Kondensator, zwischen der ersten Elektrode 16 und der dritten Elektrode 20 angeordnet. Des Weiteren weist das elektronische Steuergerät 48 eine Signalnachverarbeitungseinheit 56 und eine Datenschnittstelle 58 auf. Wie in Figur 2 dargestellt und anhand der schematisch dargestellten Signalverläufe erkennbar, ist eine Stellgröße des elektronischen Steuergeräts 48 eine der Pumpzelle 36 zugeführte Spannung $U_{RS}$. Die Regelgröße ist die Nernstspannung Uvs. Basierend auf der der Pumpzelle 36 zugeführten Spannung $U_{Rs}$ und einer an die Pumpzelle 36 angelegten Spannung $U_P$ ist ein Spannungsabfall $U_{IP}$ über den Messwiderstand 52 von dem Regelgerät 50 ermittelbar. So ist der Spannungsabfall $U_{IP}$ über den Messwiderstand 52 die Differenz aus der Stellgröße $U_{RS}$ und der an die Pumpzelle angelegten Spannung $U_P$. Auf diese Weise kann darüber hinaus der von der Sauerstoffkonzentration abhängige Strom $I_{O2}$,

der in die Pumpzelle 36 hineinfließt oder aus dieser herausfließt, aus dem Spannungsabfall $U_{IP}$ über den Messwiderstand 52 bestimmt werden, da der Messwiderstand 52 zwischen einem Ausgang des Regelgeräts 50 und der ersten Elektrode 16 angeordnet ist. Anhand der Signalverläufe ist die Besonderheit der vorliegenden Erfindung zu erkennen. So wird nicht nur der Spannungsabfall $U_{IP}$ über den Messwiderstand 52 der Signalnachverarbeitungseinheit 56 zugeführt, sondern auch die an die Pumpzelle 36 angelegte Spannung $U_P$. Anhand der an die Pumpzelle 36 angelegten Spannung $U_P$ und des Signals aus der Nachverarbeitungseinheit 56 wird der Datenschnittstelle 58 ein Signal zugeführt, das den Sauerstoffgehalt anzeigt.

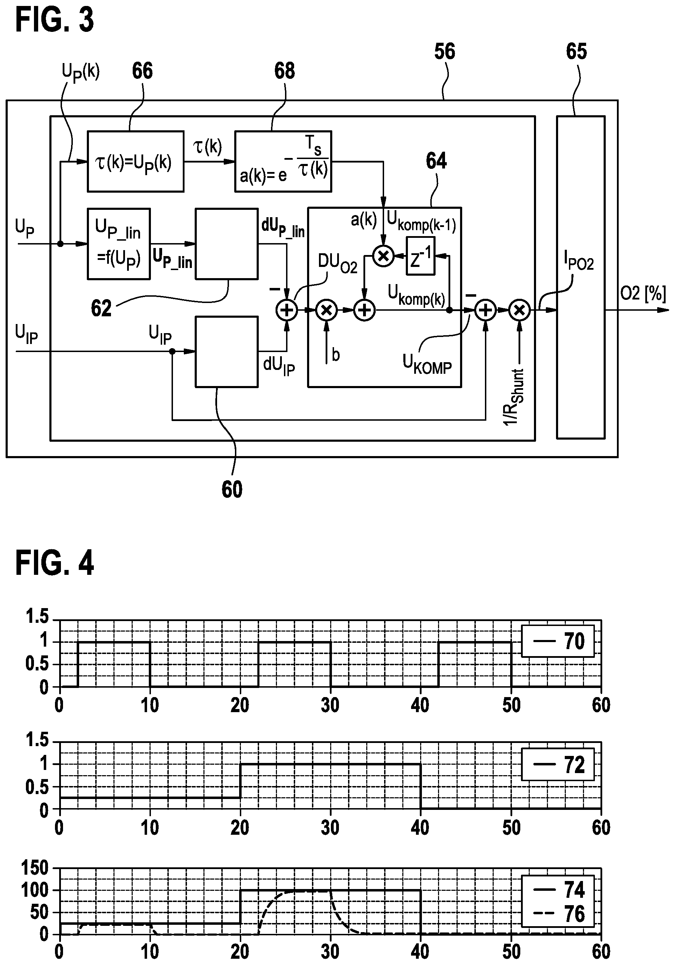

Figur 3 zeigt schematisch eine Signalverarbeitung der Umladungskorrektur in der Signalnachverarbeitungseinheit 56. Die Signalnachverarbeitungseinheit 56 bekommt ein erstes Eingangssignal in Form des Spannungsabfalls $U_{IP}$ am Messwiderstand 52, der abhängig ist vom Pumpstrom $I_P$, und ein zweites Eingangssignal in Form der an die Pumpzelle 36 angelegten Spannung $U_P$.

Der Pumpstrom $I_P$ kann ausgedrückt werden:

$$I_P = \frac{U_{IP}}{R_{Shunt}},$$

wobei

$R_{Shunt}$ [$\Omega$] der Widerstand des Messwiderstands 52 an der ersten Elektrode 16 oder der zweiten Elektrode 18 ist. Der Spannungsabfall $U_{IP}$ ist proportional zum Pumpstrom $I_P$. Zur Bestimmung der Kompensationsgröße wird ein Strom-Äquivalent $I_{UP}$ der an die Pumpzelle 36 angelegten Spannung $U_P$ gebildet. Das Strom-Äquivalent $I_{UP}$ wird basierend auf einer Impedanz $Z_P$ der Pumpzelle 36 gebildet. Die Impedanz $Z_P$ der Pumpzelle 36 wird basierend auf der an die Pumpzelle 36 angelegten Spannung $U_P$ und dem Pumpstrom $I_P$ bestimmt, beispielsweise in der Form:

$$I_{UP} = \frac{U_P}{Z_P(U_P, \ldots)}.$$

Die Impedanz $Z_P$ der Pumpzelle 36 beschreibt das Verhältnis von Strom-Äquivalent der Pumpspannung und Pumpspannung in der Form:

$$Z_P(j\,2\pi f, U_P) = \frac{U_P}{I_{P\,Grenzstrom}(2\pi f)}.$$

Die Impedanz $Z_P$ der Pumpzelle 36 kann allgemein als komplexer Zahlenwert definiert werden. Die Impedanz $Z_P$ der Pumpzelle 36 kann somit auch frequenzabgängig sein. Die Impedanz $Z_P$ der Pumpzelle 36 kann mittels eines Adaptionsalgorithmus bestimmt werden.

Das so aus dem Spannungsabfall $U_{IP}$ umgewandelte Signal wird einem ersten Hochpassfilter 60 zugeführt und das aus der an die Pumpzelle 36 angelegten Spannung $U_P$ umgewandelte Signal wird einem Hochpassfilter 62 zugeführt. Ein sich zeitlich ändernden Anteil $dU_P$ der an die Pumpzelle 36 angelegten Spannung $U_P$ und ein sich zeitlich ändernder Anteil $dU_P$ des Spannungsabfalls $U_{IP}$ werden in den Hochpassfiltern 60, 62 ermittelt. Der sich zeitlich ändernden Anteil $dU_P$ der an die Pumpzelle 36 angelegten Spannung $U_P$ kann mittels zeitlicher Differenzierung oder einer anderen Art von Hochpassfilterung des Strom-Äquivalents $I_{UP}$ der an die Pumpzelle 36 angelegten Spannung $U_P$ ermittelt werden und der sich zeitlich ändernden Anteil $dU_P$ des Spannungsabfalls $U_{IP}$ kann mittels zeitlicher Differenzierung oder einer anderen Art von Hochpassfilterung des Spannungsabfalls $U_{IP}$ ermittelt werden.

Nachfolgend wird ein Differenzsignal $DU_{O2}$ zwischen dem sich zeitlich ändernden Anteil $dUp$ des Spannungsabfalls $U_{IP}$ und dem sich zeitlich ändernden Anteil $dU_P$ der an die Pumpzelle 36 angelegten Spannung $U_P$ gebildet wird, beispielsweise in der Form:

$$DU_{O2} = dU_P - dU_{IP}$$

Dieses Differenzsignal $DU_{O2}$ ist auch ein Maß für die Verschiebung von Ladungen bei der Umladung der elektrochemischen Zellen. Eine Umladung der elektrochemischen Zelle bewirkt eine Änderung im Strom, ohne eine Änderung der an der Pumpzelle 36 angelegten Spannung $U_P$. Durch die Änderung der Nernstspannung an den Elektroden 16, 18 der Pumpzelle wird ein Umladungsstrom erzeugt. Dieser Umladungsstrom wird dem eigentlichen Signal aus dem Grenzstrom-Betrieb überlagert. Im Differenzsignal $DU_{O2}$ wird dann nur die Änderung des Umladungsstroms abgebildet.

Die Kompensationsgröße wird mittels einer Tiefpassfilterung des Differenzsignals $DU_{O2}$ bestimmt. Hierzu kann das Differenzsignal $DU_{O2}$ mit einem Tiefpassfilter 64 gefiltert werden. Der Tiefpassfilter 64 stellt eine Komponente dar, die die Eingangssignale aufsummiert, aber das in ihren inneren Zuständen enthaltene Signal graduell über die Zeit wieder reduziert. Am Ausgang des Tiefpassfilters 64 ist das Umladungs-Kompensationsstromsignal $U_{Komp}$. Aufgabe des Tiefpassfilters 64 ist, den Verlauf des Differenzsignals $DU_{O2}$ über das Zeitintervall der Störung zu summieren. Ist das Differenzsignal $DU_{O2}$ klein, wird das Kompensationsstromsignal $U_{Komp}$ gegen Null.

Die korrigierte Messgröße wird schließlich durch Subtraktion der Kompensationsgröße von der Messgröße bestimmt. So wird insbesondere das Umladungs-Kompensationssignal $I_{Komp}$ vom gemessenen Pumpstromsignal $I_P$ abgezogen, beispielsweise in der Form:

$$I_{PO2} = I_P - I_{Komp} .$$

Aus dem korrigierten Pumpstromsignal $I_{PO2}$ kann nun ein Signal abgeleitet werden, das die Konzentrationen und zeitlichen Änderungen des Sauerstoffgehalts des Messgases wiedergibt. Nachfolgend kann mit Hilfe von mindestens einem Kennfeld 65 aus dem korrigierten Pumpstromsignal $I_{PO2}$ ein kalibriertes Sauerstoff-Signal als korrigierte Messgröße abgeleitet werden.

Bei dem zuvor beschriebenen Verfahren gilt grundsätzlich, dass der Pumpstrom der Pumpzelle und die an die Pumpzelle angelegte Spannung zueinander bezogen werden müssen. Die weiteren Rechenschritte müssen nicht notwendigerweise in äquivalenten Strömen erfolgen. Die Division der Spannungen durch die Impedanzen können vermieden werden. Alternativ kann mit deren Kehrwerten oder anderen äquivalenten Faktoren multipliziert werden.

Durch die Erfindung werden die zuvor beschriebenen Funktionen der Signalverarbeitung zur Kompensation der Umladungseffekte beim Lambda=1 Durchgang um folgende Funktionen erweitert: Tiefpass-Filter mit gesteuerter Zeitkonstante an der Stelle 66 und Verstärkungsfunktion zur Steuerung der Filter Zeitkonstanten an der Stelle 68, wobei die Stellen 66 und 68 in dieser Reihenfolge mit dem Eingang des Tiefpassfilters 64 verbunden sind.

Die Funktion, mit der das Spannungssignal $U_P$ an der ersten Elektrode 16 der Pumpzelle 36 in eine zum Pumpstrom äquivalente Größe umgewandelt wird, ist hier nicht adaptiv, sondern mittels eines festen Kennfelds wird eine Abbildung durchgeführt.

Zur Umsetzung des bei der Signalverarbeitung verwendeten Algorithmus wird ein spezielles rekursives Tiefpass-Filter 64 verwendet, dessen Struktur der eines exponentiellen Mittelwertbildungsfilters bzw. PT1-Filters ähnelt, aber in seinem Übertragungsverhalten grundlegende Unterschiede aufweist. Ein exponentielles Mittelwertbildungsfilter oder PT1-Tiefpassfilter verstärkt das Ausgangssignal gegenüber dem Eingangssignal nicht. Es hat typischerweise eine Verstärkung von 1. Im Gegensatz hierzu hat das Tiefpassfilter 64 in der Signalverarbeitung der Lambda=1-Welligkeits Kompensation einen veränderbaren Verstärkungsfaktor $G = b/(1-a(k))$, die von den jeweiligen Koeffizienten a(k) im rekursiven Pfad abhängt, wobei k das Taktintervall der digitalen Signalverarbeitung ist. Diese Abhängigkeit des Verstärkungsfaktors des Tiefpassfilters 64 vom Parameter a(k) im rekursiven Pfad bzw. der Antwort-Zeitkonstanten $\tau(k)$ ist durch die Impulsantworten erkennbar. Je größer die Zeitkonstante ist, um so größer ist auch der Verstärkungsfaktor des Tiefpassfilters 64. Beim Exponentiellen Mittelwertbildungsfilter hingegen skaliert der Faktor (1-a) die Verstärkung der Impulsantwort auf 1.

Im Zusammenhang mit dem Algorithmus zur Kompensation der Lambda=1-Welligkeit ist das Tiefpassfilter 64 durch $U_{komp}(k) = b \cdot DI_{O2}(k) + a(k) U_{komp}(k-1)$ mit der Übertragungsfunktion

$$\frac{U_{komp}(z)}{DI(z)} = \frac{b}{1 - a \cdot z^{-1}}$$

beschrieben. Hier ist a(k) der Koeffizient, der die Zeitkonstante und die Verstärkung des Filters steuert und b ist eine feste Konstante, z.B. b=1.

Figur 4 zeigt an einem Beispiel Signale des Tiefpassfilters 64 mit gesteuerter Antwort-Zeitkonstante und Verstärkungsfaktor, die die Funktionsweise des Tiefpassfilters 64 erklären. Die obere Grafik zeigt ein Signal 70 am Eingang des Tiefpassfilters 64 über die Zeit aufgetragen. Die mittlere Grafik zeigt die Zeitkonstante 72 über die Zeit aufgetragen. Die untere Grafik zeigt den Verstärkungsfaktor 74 und ein Signal 76 am Ausgang des Tiefpassfilters 64 über die Zeit aufgetragen. Die Zeit ist dabei jeweils in Sekunden angegeben.

Aus der oberen Grafik ist erkennbar, dass am Eingang des Tiefpassfilters 64 eine Folge von drei Rechteckpulsen anliegt. Wie in der mittleren Grafik gezeigt, wird die Zeitkonstante $\tau(k)$ des Tiefpassfilters 64 bzw. sein Parameter a(k) zwischen den Pulsen jeweils verändert. Wie in der unteren Grafik gezeigt, ändert sich damit jeweils auch der Verstärkungsfaktor $G = 1/(1-a(k))$ des Tiefpassfilters 64. Am Verlauf des Signals 76 am Ausgang ist deutlich zu erkennen, wie sich einerseits die Antwortzeiten der Sprungantworten und gleichzeitig auch der Verstärkungsfaktor $G = 1/(1-a(k))$ des Signals 76 am Ausgang ändert. So ist bei dem zeitlich gesehen ersten Rechteckpuls des Signals 70 am Eingang des Tiefpassfilters 64 die Zeitkonstante $\tau = 0,25$ und der Filterparameter a = 0,9608 und bei dem zeitlich gesehen zweiten Rechteckpuls des Signals 70 am Eingang des Tiefpassfilters 64 ist die Zeitkonstante $\tau = 1,0$ und der Filterparameter a = 0,9900. Ist die Zeitkonstante 72 des Tiefpassfilters 64 gleich null, wie die bei dem zeitlich gesehen dritten Rechteckpuls des Signals 70 am Eingang des Tiefpassfilters 64 der Fall ist, dann ist auch das Signal 76 am Ausgang des Tiefpassfilters 64 gleich null.

Sowohl der Verstärkungsfaktor G (= Gain) als auch die Antwort-Zeitkonstante $\tau$ und die Verzögerung des Tiefpassfilters 64 hängen vom Wert des Gewichtungsfaktors a(k) im rekursiven Pfad des Tiefpassfilters 64 ab. Damit unterscheidet sich dieses Tiefpassfilter 64 in seiner Funktionalität grundsätzlich von PT1-Filtern, rekursiven Tiefpass-Filtern und typischen exponentiellen Mittelwertbild u ngsfi ltern.

Der Effekt und die Funktion des Tiefpassfilters 64 in der Signalverarbeitung zur Umladungskompensation, die die Lambda=1-Welligkeit reduziert, hängt sehr stark von der Antwort-Zeitkonstanten $\tau$, bzw, dem Parameter a(k) im rekursiven Pfad dieses speziellen Tiefpassfilters 64 ab. Der Filterparameter a(k) hängt mit

$$a(k) = e^{-\frac{T_S}{\tau(k)}}$$

von der Antwortzeit $\tau$ des Tiefpassfilters 64 und der Abtastintervalldauer $T_S$ der digitalen Signalverarbeitung ab. Der Filterparameter a bestimmt, wie zuvor beschrieben, sowohl die Antwortzeit als auch den Verstärkungsfaktor dieses speziellen Tiefpassfilters 64.

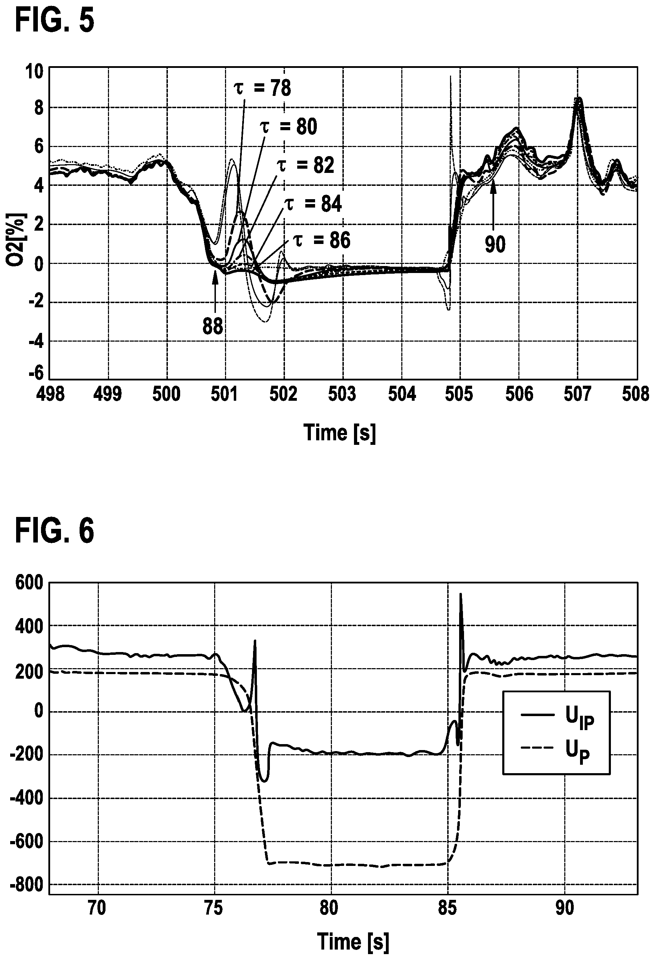

Figur 5 zeigt verschiedene Messsignalverläufe über die Zeit aufgetragen. Die Zeit ist dabei in Sekunden angegeben. Auf der X-Achse ist die Zeit aufgetragen und auf der Y-Achse die Werte des Messsignals, die bei dem hier gezeigten Beispiel der Sauerstoffgehalt in Prozent sind. Die Kurve 78 gibt den Verlauf des Messsignals mit einer Zeitkonstanten $\tau = 0{,}25$ an. Die Kurve 80 gibt den Verlauf des Messsignals mit einer Zeitkonstanten $\tau = 0{,}5$ an. Die Kurve 82 gibt den Verlauf des Messsignals mit einer Zeitkonstanten $\tau = 0{,}75$ an. Die Kurve 84 gibt den Verlauf des Messsignals mit einer Zeitkonstanten $\tau = 1{,}0$ an. Die Kurve 86 gibt den Verlauf des Messsignals mit einer Zeitkonstanten $\tau = 1{,}25$ an. Aus den Kurven 78, 80, 82, 84, 86 sind die Effekte der Zeitkonstanten $\tau$ des Tiefpassfilters 64 auf die Reduzierung der Lambda=1-Welligkeit einerseits und auf mögliche Fehlkorrekturen im Mageren andererseits gut zu erkennen. So ist an der Stelle 88 erkennbar, dass eine größere Zeitkonstante $\tau$ die Reduzierung der Lambda=1-Welligkeit verbessert. Gleichzeitig kann aber eine größere Zeitkonstante $\tau$ die Fehlkorrekturen im Mageren vergrößern, wie an der Stelle 90 erkennbar ist. Aufgrund dieses Zusammenhangs schlägt die Erfindung vor, in der Nähe des Lambda=1-Punkts das Tiefpassfilter 64 mit Parametern mit größeren Zeitkonstanten $\tau$ zu bedaten, während im normalen Betriebsbereich, insbesondere im Mageren, eine möglichst kleine Zeitkonstante $\tau$ vorteilhaft ist.

Um die je nach Betriebspunkt und Konzentration des Messgases unterschiedlichen Vorteile der Zeitkonstanten und des Verstärkungsfaktors des speziellen Tiefpassfilters 64 nutzen zu können, ist ein Kriterium erforderlich, das bestimmt wann und wie der Filterparameter $a(k)$, also der Gewichtungsfaktor im rekursiven Pfad, verändert wird. Die Erfindung schlägt daher eine Steuerung des Filterparameters $a(k)$ vor. Ein mögliches Kriterium kann von der Spannung $U_P$ an der ersten Elektrode 16 abgeleitet werden.

Figur 6 zeigt einen Verlauf der Spannung an der Pumpzelle $U_P$ und des Spannungsabfalls $U_{IP}$ am Messwiderstand 52. Auf der X-Achse ist die Zeit aufgetragen und auf der Y-Achse sind die Werte des Spannungsabfalls $U_{IP}$ am Messwiderstand 52 und der Spannung $U_P$ an der Pumpzelle 36 in mV aufgetragen. Lediglich beispielhaft ist der Verlauf des Spannungsabfalls $U_{IP}$ am Messwiderstand 52 und der Spannung $U_P$ an der Pumpzelle 36 während einer Regeneration eines NSC-Katalysators gezeigt. Betrachtet man für das Beispiel der in Figur 6 dargestellten Signale die Spannung $U_P$ an der ersten Elektrode 16 sowie den zum Pumpstrom $I_P$ proportionalen Spannungsabfall $U_{IP}$ am Messwiderstand 52, so ist feststellbar, dass sich die Spannung $U_P$ mit der Konzentration des Messgases stetig ändert und nicht durch Lambda=1-Welligkeit gestört ist. Allerdings ist die Spannung $U_P$ nicht proportional zur Konzentration des Messgases. Aus dem Spannungssignal $U_P$ lässt sich ein Kriterium herleiten, das die Konzentrationen des Messgases um den Lambda=1-Punkt anzeigt, in dem größere Zeitkonstanten des Tiefpassfilters 64 zur Kompensation der Lambda=1-Welligkeit benötigt werden.

Eine Steuerung des Filter-Parameters $a(k)$ in Abhängigkeit von der Spannung $U_P(k)$ kann durch eine Abbildungsfunktion des Spannungssignals $U_P(k)$ auf den Filter-Parameter $a(k)$ umgesetzt werden. Das Blockschaltbild in Figur 4 zeigt, wie die Spannung $U_P$ mit Hilfe einer Abbildungsfunktion an den Stellen 66 und 68 auf die Zeitkonstante $\tau(k)$ bzw. den Parameter $a(k)$ im rekursiven Pfad des Tiefpassfilters 64 abgebildet werden kann.

Solch eine Abbildungsfunktion kann zum Beispiel einfach mit Hilfe einer linearen Interpolation und einem hinterlegten Kennfeld umgesetzt werden. Mittels einer solchen Abbildungsfunktion kann die Zeitkonstante $\tau(k)$ als Funktion von $U_P(k)$ gesteuert werden. Zusätzlich kann hierzu die Kennlinie des Pumpstroms $I_P$ als Funktion der Pumpspannung $U_P$ verwendet werden. In den Bereichen von $U_P$ im Mageren, in denen eine Fehl-Anpassung einer festen Kennlinie $I_P = f(U_P)$ zu Fehlkorrekturen führen könnte, ist die Zeitkonstante $\tau$ des Filters sehr klein. Es wird bei diesen Spannungen kein Kompensationssignal erzeugt und somit sind auch Fehlkorrekturen nicht möglich. Wie in Figur 4 gezeigt, kann die Zeitkonstante $\tau(k)$ des Tiefpassfilters 64 bzw. der Parameter $a(k)$ mit jedem Taktintervall k der digitalen Signalverarbeitung geändert werden.

Alternativ zu den zuvor beschriebenen Filterstrukturen können auch andere Tiefpassfilter verwendet werden, die ähnliche Übertragungseigenschaften haben. So können zum Beispiel auch mit Filtern höherer Ordnung Tiefpassfilter umgesetzt werden, deren Zeitkonstante bzw. Bandbreite und Verstärkungsfaktor durch Änderung der Filterparameter gesteuert werden kann. Neben der Spannung $U_P$ können auch andere Signale zur Steuerung der Zeitkonstanten des Tiefpassfilters verwendet werden. Zum Beispiel kann eine Änderung der Zeitkonstanten durch das Differenzsignal $DI_{O2}$ ausgelöst werden.

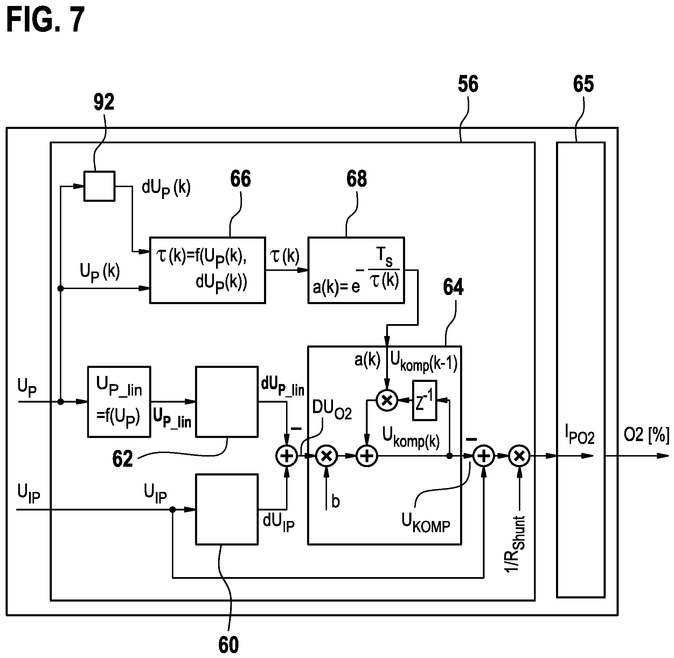

Figur 7 zeigt ein Blockschaltbild mit einer alternativen Signalverarbeitung. Dabei werden lediglich die Unterschiede zu der Ausführungsform in Figur 3 erläutert und gleiche Bauteile sind mit gleichen Bezugszeichen versehen. Alternativ zum Wert der Spannung $U_P$ an der Pumpzelle kann auch die zeitliche Änderung des Wertes der Spannung $U_P$ an der ersten Elektrode 16 als Kriterium genutzt werden, mit dessen Hilfe die Zeitkonstante und der Verstärkungsfaktor des Tiefpassfilters 64 gesteuert wird, das zur Erzeugung des Lambda=1-Kompensationssignals erforderlich ist. Das Blockschaltbild in Figur 6 zeigt, wie mit einem Hochpassfilter 92 die zeitlich schnell veränderlichen Anteile des Signals der Spannung $U_P$ an der ersten Elektrode 16 herausgefiltert werden. Als Funktion der höherfrequenten Anteile der Spannung $U_P$ an der ersten Elektrode 16 wird ein Signal gebildet, mit dem die Zeitkonstante und der Verstärkungsfaktor des Tiefpassfilters 64 zur Kompensation der Lambda=1-Welligkeit gesteuert werden kann. Während vom $U_P$-Signal der Gleichanteil und langsam veränderliche Anteile herausgefiltert werden, bleiben die zeitlich veränderlichen Anteile nahezu unverändert.

Der Spannungsabfall $U_{IP}$ am Messwiderstand 52 hängt im Mageren und im Fetten näherungsweise linear vom Sauerstoffgehalt (bzw. Sauerstoffbedarf) des Messgases ab, wobei die Abhängigkeit vom Sauerstoffbedarf im Fetten durch einen anderen Faktor als vom Sauerstoffgehalt im Mageren beschrieben werden kann. Bei Mager-Fett-Wechseln, bei denen der Lambda=1-Punkt mit 0% $O_2$, Spannung $U_P$ = 0 V an der Pumpzelle 36 und Spannungsabfall $U_{IP}$ = 0 V am Messwiderstand 52 durchschritten wird, beobachtet man eine lineare Abhängigkeit von $U_{IP}$ vom Sauerstoffgehalt, sofern das $U_{IP1}$ Signal nicht durch eine Lambda-Welligkeit gestört wird. Die Spannung $U_P$ an der Pumpzelle 36 zeigt im Mageren (> 1% $O_2$) und im Fetten (< ca.1 % $O_2$) ein näherungsweise lineares Verhalten. In der Nähe des Lambda=1-Punktes mit 0 % $O_2$ hat die Spannung $U_P$ an der ersten Elektrode 16 hingegen ein stark nichtlineares Verhalten als Funktion vom Sauerstoffgehalt.

Diese Charakteristik, dass sich die Spannung $U_P$ an der ersten Elektrode 16 in der Nähe des Lambda=1-Punktes sehr stark als Funktion vom Sauerstoffgehalt ändert, während diese Änderung außerhalb des Lambda=1-Punktes viel geringer ist, führt dazu, dass sich die Spannung $U_P$ an der ersten Elektrode 16 beim Durchschreiten des Lambda=1-Punktes sehr schnell und sehr stark ändert. Wird das Signal $U_P$ mit dem Hochpassfilter 92 gefiltert, dann können die zeitlich schnell veränderlichen Anteile durchgelassen werden, während die Gleichanteile des Signals herausgefiltert werden. Dieses Signal hat beim Lambda=1 Durchgang jeweils einen vergleichsweise hohen Betrag, während dieses Signal außerhalb des Lambda=1-Punktes näherungsweise gleich Null ist. Die mittels des Hochpassfilters 92 gefilterten Anteile des Signals der Spannung $U_P$ an der ersten Elektrode 16 können als Kriterium genutzt werden, um die Zeitkonstante und den Verstärkungsfaktor des Tiefpassfilters 64 in der Lambda=1-Welligkeits Kompensation zu steuern. Im Blockschaltbild der Signalverarbeitung der Lambda=1-Welligkeits Kompensation in Figur 7 werden sowohl die Spannung $U_P$ an der ersten Elektrode 16 als auch die mittels des Hochpassfilters 92 gefilterten Anteile von $U_P$ an der ersten Elektrode 16 genutzt um die Zeitkonstante und den Verstärkungsfaktor des Tiefpassfilters 64 in der Lambda=1-Welligkeitskompensation zu steuern.

**Patentansprüche**

1. Verfahren zum Betreiben eines Sensors (10) zur Erfassung eines Sauerstoffanteils in einem Abgas einer Brennkraftmaschine, umfassend ein Sensorelement (12) zur Erfassung des Sauerstoffanteils, wobei das Sensorelement (12) einen Festelektrolyten (14), eine erste Elektrode (16), eine zweite Elektrode (18), eine dritte Elektrode (20) und eine vierte Elektrode (22) aufweist, wobei die erste Elektrode (16) und die zweite Elektrode (18) derart mit dem Festelektrolyten (14) verbunden sind, dass die erste Elektrode (16), die zweite Elektrode (18) und der Festelektrolyt (14) eine Pumpzelle (36) bilden, wobei die dritte Elektrode (20) und die vierte Elektrode (22) derart mit dem Festelektrolyten (14) verbunden sind, dass die dritte Elektrode (20), die vierte Elektrode (22) und der Festelektrolyt (14) eine Nernstzelle (40) bilden, wobei eine Nernstspannung ($U_{VS}$) der Nernstzelle (40) geregelt wird, wobei ein Messsignal des Sensorelements (12) basierend auf einem Pumpstrom ($I_P$) ermittelt wird, wobei weiterhin mittels einer Signalverarbeitung eine Kompensationsgröße bestimmt wird, wobei aus dem Messsignal und der Kompensationsgröße mindestens eine korrigiertes Messsignal bestimmt wird, wobei aus der korrigierten Messsignal der Sauerstoffanteil in dem Abgas bestimmt wird, wobei die Kompensationsgröße zumindest teilweise abhängig ist von dem Pumpstrom ($I_P$) und einer an die Pumpzelle (36) angelegten Spannung ($U_P$), wobei die Signalverarbeitung zur Bestimmung der Kompensationsgröße eine Tiefpassfilterung des Pumpstroms ($I_P$) und der an die Pumpzelle (36) angelegten Spannung ($U_P$) mittels eines Tiefpassfilters (64) umfasst, wobei eine Zeitkonstante ($\tau$) und/oder ein Verstärkungsfaktors (G) des Tiefpassfilters (64) in Abhängigkeit von der an die Pumpzelle (36) angelegten Spannung ($U_P$) oder einem sich zeitlich ändernden Anteil ($dU_P$) der an die Pumpzelle (36) angelegten Spannung ($U_P$) gesteuert wird, wobei die Zeitkonstante ($\tau$) und/oder der Verstärkungsfaktors (G) des Tiefpassfilters (64) vergrößert wird, falls die an die Pumpzelle (36) angelegten Spannung ($U_P$) und/oder der sich zeitlich ändernden Anteil ($dU_P$) der an die Pumpzelle (36) angelegten Spannung ($U_P$) einen vorbestimmten Wert erreicht, wobei der vorbestimmte Wert eine vorbestimmte Zusammensetzung des Abgases darstellt, wobei die vorbestimmte Zusammensetzung des Abgases Lambda = 1 ist.

2. Verfahren nach dem vorhergehenden Anspruch, wobei die Zeitkonstante ($\tau$) und/oder der Verstärkungsfaktor (G) mittels einer Abbildungsfunktion in Abhängigkeit von der an die Pumpzelle (36) angelegten Spannung ($U_P$) variiert werden.

3. Verfahren nach dem vorhergehenden Anspruch, wobei die Abbildungsfunktion mittels Interpolation, insbesondere linearer Interpolation, und einem Kennfeld gebildet wird.

4.  Verfahren nach einem der vorhergehenden Ansprüche, wobei der sich zeitlich ändernden Anteil ($dU_P$) der an die Pumpzelle (36) angelegten Spannung ($U_P$) mittels eines Hochpassfilters (92) aus der an die Pumpzelle (36) angelegten Spannung ($U_P$) herausgefiltert wird.

5.  Computerprogramm, welches eingerichtet ist, unter Verwendung des Sensors nach Anspruch 8 jeden Schritt des Verfahrens nach einem der drei vorhergehenden Ansprüche durchzuführen.

6.  Elektronisches Speichermedium, auf welchem ein Computerprogramm nach dem vorhergehenden Anspruch gespeichert ist.

7.  Elektronisches Steuergerät (48), welches ein elektronisches Speichermedium nach dem vorhergehenden Anspruch umfasst.

8.  Sensor (10) zur Erfassung eines Sauerstoffanteils in einem Abgas einer Brennkraftmaschine, umfassend ein Sensorelement (12) zur Erfassung der Eigenschaft des Messgases, wobei das Sensorelement (12) einen Festelektrolyten (14), eine erste Elektrode (16), eine zweite Elektrode (18), eine dritte Elektrode (20) und eine vierte Elektrode (22) aufweist, wobei die erste Elektrode (16) und die zweite Elektrode (18) derart mit dem Festelektrolyten (14) verbunden sind, dass die erste Elektrode (16), die zweite Elektrode (18) und der Festelektrolyt (14) eine Pumpzelle (36) bilden, wobei die dritte Elektrode (20) und die vierte Elektrode (22) derart mit dem Festelektrolyten (14) verbunden sind, dass die dritte Elektrode (20), die vierte Elektrode (22) und der Festelektrolyt (14) eine Nernstzelle (40) bilden, wobei der Sensor (10) weiterhin ein elektronisches Steuergerät (48) nach dem vorhergehenden Anspruch aufweist.

**Claims**

1.  Method for operating a sensor (10) for measuring an amount of oxygen in an exhaust gas of an internal combustion engine, comprising a sensor element (12) for measuring the amount of oxygen, wherein the sensor element (12) comprises a solid electrolyte (14), a first electrode (16), a second electrode (18), a third electrode (20) and a fourth electrode (22), wherein the first electrode (16) and the second electrode (18) are connected to the solid electrolyte (14) in such a way that the first electrode (16), the second electrode (18) and the solid electrolyte (14) form a pump cell (36), wherein the third electrode (20) and the fourth electrode (22) are connected to the solid electrolyte (14) in such a way that the third electrode (20), the fourth electrode (22) and the solid electrolyte (14) form a Nernst cell (40), wherein a Nernst voltage ($U_{vs}$) of the Nernst cell (40) is regulated, wherein a measurement signal from the sensor element (12) is ascertained on the basis of a pump current ($I_P$), wherein a compensation variable is also determined by a signal processing method, wherein at least one corrected measurement signal is determined from the measurement signal and the compensation variable, wherein the amount of the oxygen in the exhaust gas is determined from the corrected measurement signal, wherein the compensation variable at least partly depends on the pump current ($I_P$) and a voltage ($U_P$) which is applied to the pump cell (36), wherein the processing of the signal in order to determine the compensation variable includes using a low-pass filter (64) to carry out a low-pass filtering process of the pump current ($I_P$) and the voltage ($U_P$) which is applied to the pump cell (36), wherein a time constant ($\tau$) and/or an amplification factor (G) of the low-pass filter (64) is controlled depending on the voltage ($U_P$) which is applied to the pump cell (36) or a component ($dU_P$) of the voltage ($U_P$) which is applied to the pump cell (36) which changes over time, wherein the time constant ($\tau$) and/or the amplification factor (G) of the low-pass filter (64) is increased if the voltage ($U_P$) which is applied to the pump cell (36) and/or the component ($dU_P$) of the voltage ($U_P$) which is applied to the pump cell (36) reaches a predetermined value, wherein the predetermined value represents a predetermined composition of the exhaust gas, wherein the predetermined composition of the exhaust gas is Lambda = 1.

2.  Method according to the preceding claim, wherein a mapping function is used to vary the time constant ($\tau$) and/or the amplification factor (G) depending on the voltage ($U_P$) which is applied to the pump cell (36).

3.  Method according to the preceding claim, wherein the mapping function is formed by means of interpolation, in particular linear interpolation, and a characteristic map.

4.  Method according to one of the preceding claims, wherein the component ($dU_P$) of the voltage ($U_P$) which is applied to the pump cell (36) which changes over time is filtered out of the voltage ($U_P$) which is applied to the pump cell (36) by means of a high-pass filter (92).

5.  Computer program, which is set up to carry out each step of the method according to one of the three preceding claims using the sensor according to Claim 8.

**6.** Electronic storage medium, on which a computer program according to the preceding claim is stored.

**7.** Electronic control device (48), which comprises an electronic storage medium according to the preceding claim.

**8.** Sensor (10) for measuring an amount of oxygen in an exhaust gas of an internal combustion engine, comprising a sensor element (12) for detecting the property of the measurement gas, wherein the sensor element (12) comprises a solid electrolyte (14), a first electrode (16), a second electrode (18), a third electrode (20) and a fourth electrode (22), wherein the first electrode (16) and the second electrode (18) are connected to the solid electrolyte (14) in such a way that the first electrode (16), the second electrode (18) and the solid electrolyte (14) form a pump cell (36), wherein the third electrode (20) and the fourth electrode (22) are connected to the solid electrolyte (14) in such a way that the third electrode (20), the fourth electrode (22) and the solid electrolyte (14) form a Nernst cell (40), wherein the sensor (10) also comprises an electronic control device (48) according to the preceding claim.

## Revendications

**1.** Procédé de fonctionnement d'un capteur (10) de détection d'une proportion d'oxygène dans un gaz d'échappement d'un moteur à combustion interne, comprenant un élément de capteur (12) destiné à détecter la proportion d'oxygène, l'élément de capteur (12) comportant un électrolyte solide (14), une première électrode (16), une deuxième électrode (18), une troisième électrode (20) et une quatrième électrode (22), la première électrode (16) et la deuxième électrode (18) étant reliées à l'électrolyte solide (14) de telle sorte que la première électrode (16), la deuxième électrode (18) et l'électrolyte solide (14) forment une cellule de pompage (36), la troisième électrode (20) et la quatrième électrode (22) étant reliées à l'électrolyte solide (14) de telle sorte que la troisième électrode (20), la quatrième électrode (22) et l'électrolyte solide (14) forment une cellule de Nernst (40), une tension de Nernst ($U_{VS}$) de la cellule de Nernst (40) étant régulée, un signal de mesure de l'élément de détection (12) étant déterminé sur la base d'un courant de pompage ($I_P$), une valeur de compensation étant en outre déterminée au moyen d'un traitement de signal, au moins un signal de mesure corrigé étant déterminé à partir du signal de mesure et de la valeur de compensation, la proportion d'oxygène dans le gaz d'échappement étant déterminée à partir du signal de mesure corrigé, la valeur de compensation étant au moins partiellement dépendante du courant de pompage ($I_P$) et d'une tension ($U_P$) appliquée à la cellule de pompage (36), le traitement de signal destiné à la détermination de la valeur de compensation comprenant un filtrage passe-bas du courant de pompage ($I_P$) et de la tension ($U_P$) appliquée à la cellule de pompage (36) au moyen d'un filtre passe-bas (64), une constante de temps ($\tau$) et/ou un facteur d'amplification (G) du filtre passe-bas (64) étant commandés en fonction de la tension ($U_P$) appliquée à la cellule de pompage (36) ou d'une partie variable dans le temps ($dU_P$) de la tension ($U_P$) appliquée à la cellule de pompage (36), la constante de temps ($\tau$) et/ou le facteur d'amplification (G) du filtre passe-bas (64) étant augmentés dans le cas où la tension ($U_P$) appliquée à la cellule de pompage (36) et/ou la partie variable dans le temps ($dU_P$) de la tension ($U_P$) appliquée à la cellule de pompage (36) atteint une valeur prédéterminée, la valeur prédéterminée représentant une composition prédéterminée des gaz d'échappement, la composition prédéterminée des gaz d'échappement étant lambda = 1.

**2.** Procédé selon la revendication précédente, dans lequel la constante de temps ($\tau$) et/ou le facteur d'amplification (G) sont amenés à varier au moyen d'une fonction de mappage en fonction de la tension ($U_P$) appliquée à la cellule de pompage (36).

**3.** Procédé selon la revendication précédente, dans lequel la fonction de mappage est formée au moyen d'une interpolation, en particulier d'une interpolation linéaire, et d'un diagramme caractéristique.

**4.** Procédé selon l'une quelconque des revendications précédentes, dans lequel la partie variable dans le temps ($dU_P$) de la tension ($U_P$) appliquée à la cellule de pompage (36) est filtrée à partir de la tension ($U_P$) appliquée à la cellule de pompage (36) au moyen d'un filtre passe-haut (92).

**5.** Programme d'ordinateur conçu pour mettre en œuvre, à l'aide du capteur selon la revendication 8, chaque étape du procédé selon l'une quelconque des trois revendications précédentes.

**6.** Support de stockage électronique sur lequel est stocké un programme informatique selon la revendication précédente.

**7.** Appareil électronique de commande (48) comprenant un support de stockage électronique selon la revendication précédente.

**8.** Capteur (10) destiné à détecter une proportion d'oxygène dans un gaz d'échappement d'un moteur à combustion interne, comprenant un élément de détection (12) destiné à détecter la propriété du gaz de mesure, l'élément de détection (12) comportant un électrolyte solide (14), une première électrode (16), une deuxième électrode (18), une troisième électrode (20) et une quatrième électrode (22), la première électrode (16) et la deuxième électrode (18) étant reliées à l'électrolyte solide (14) de telle sorte que la première électrode (16), la deuxième électrode (18) et l'électrolyte solide (14) forment une cellule de pompage (36), la troisième électrode (20) et la quatrième électrode (22) étant reliées à l'électrolyte solide (14) de telle sorte que la troisième électrode (20), la quatrième électrode (22) et l'électrolyte solide (14) forment une cellule de Nernst (40), le capteur (10) comportant en outre un appareil électronique de commande (48) selon la revendication précédente.

# FIG. 1

# FIG. 2

$$U_{RS} = U_P + U_{IP}$$

# FIG. 3

# FIG. 4

## FIG. 5

## FIG. 6

# FIG. 7

**IN DER BESCHREIBUNG AUFGEFÜHRTE DOKUMENTE**

**In der Beschreibung aufgeführte Patentdokumente**

- DE 102015206867 A1
- US 6270639 B1
- US 2005034986 A1

**In der Beschreibung aufgeführte Nicht-Patentliteratur**

- **DEITSCHE, K-H. et al.** Kraftfahrtechnisches Taschenbuch. Springer Vieweg, 2014, 1338-1347